# EUROPEAN PATENT SPECIFICATION

(11) **EP 2 753 142 B1**
(45) Date of publication and mention of the grant of the patent: **19.08.2015**
(21) Application number: 13187410.9
(22) Date of filing: 08.01.2013
(51) Int. Cl.: H04W 88/08

(54) **Apparatus, method and computer program for splitting baseband data processing between a plurality of baseband processing units**
Vorrichtung, Verfahren und Computerprogramm zum Aufteilen der Basisbanddatenverarbeitung zwischen einer Vielzahl von Basisbandverarbeitungseinheiten
Appareil, procédé et programme informatique de traitement de données de bande de base de division entre une pluralité d'unités de traitement de bande de base

(43) Date of publication of application: 09.07.2014
(62) Divisional of application: 13305011.2
(73) Proprietor: ALCATEL LUCENT, 92100 Boulogne-Billancourt (FR)
(72) Inventor: Boccardi, Federico, 2059 Vimercate, MI (IT); Doetsch, Uwe, 70435 Stuttgart (DE)
(74) Representative: Knecht, Ulrich Karl

(56) References cited:
- EP-A1- 1 713 290
- EP-A1- 2 416 605
- EP-A2- 1 246 484
- EP-A2- 2 079 274
- WO-A1-96/27269

## Description

Embodiments of the present invention relate to mobile communications and, more particularly, to mobile communication networks using remote units and central units in base stations.

### Background

Demands for higher data rates for mobile services are steadily increasing. At the same time, modem mobile communication systems, such as 3^{rd} Generation (3G) systems and 4^{th} Generation (4G) systems provide enhanced technologies which enable higher spectral efficiencies and allow for higher data rates and cell capacities. As the demand for high-rate services with increasing variance grows faster than the cell capacities, operators are urged to increase the number of cells in their networks, i.e., the density of base stations increases. Base station transceivers are major contributors to the overall power consumption of a mobile communication system or network and therewith also major contributors to the Operational Expenditures (OPEX) operators are facing. One power saving strategy is to move processing capacity away from the base station transceivers towards centralized processing units providing processing capabilities for several remote units.

Mobile communication networks using remote units and central units and/or load sharing concepts are addressed by documents EP 1 713 290 A1, EP 2 416 605 A1, WO 96/27269 A1, EP 2 079 274 A2, and EP 1 246 484 A2, for example.

That is to say, a conventional base station transceiver in wireless communication systems, like the Universal Mobile Telecommunication System (UMTS) and Long-Term Evolution (LTE) system, can be split into two separate units: a Remote Unit (RU), which may also be referred to as Remote Radio Head (RRH), and a Central Unit (CU), which may also be referred to as Baseband Unit (BBU) or baseband processing unit. The remote unit and the baseband processing unit of a base station may be connected to each other either by electrical or optical links through a backhaul network. Time domain IQ baseband data samples may be exchanged between the remote unit and its associated central baseband processing unit. This concept is well-known and can already be found in the product line-up of infrastructure suppliers. Note that the terms central unit and baseband unit or baseband processing unit will be used interchangeably throughout this specification.

A remote unit or RRH typically comprises one or more Radio Frequency (RF) front ends, i.e., electrical analog and/or digital circuitry for transmitting and receiving RF or transmission band signals to or from a plurality of mobile units associated to or served by the remote unit. For the UpLink (UL) path the remote unit may comprise one or more receive antennas which may also be used as transmit antennas for the DownLink (DL). For the uplink path the remote unit may also comprise analog and/or digital filters corresponding to the uplink signal bandwidth and frequency as well as one or more Low Noise Amplifiers (LNAs). For the downlink path, respective analog and/or digital downlink filters may be coupled to one or more Power Amplifiers (PAs) and one or more transmit antennas.

A central baseband processing unit dedicated to a remote unit typically comprises digital signal processing circuitry for processing digital baseband samples received from or to be transmitted to the remote unit. Thereby the digital baseband processing may comprise baseband processing in accordance with one or more logical layers of a network protocol stack, such as the PHYsical layer or Layer 1 (PHY or L1), the datalink layer or Layer 2 (L2), the network layer or Layer 3 (L3), etc.

The resulting architecture with base stations being separated into central and remote units may also be referred to as Cloud Radio Access Network (C-RAN) and is a candidate for future wireless cellular network deployments. With C-RAN part of the processing/protocol stack, which has been traditionally performed directly at the radio sites in conventional RAN, is shifted to the central unit of a base station that implements the digital baseband processing of L1, L2, and L3. In contrast, the remote unit (RRH) obtains the digital baseband signals from the central unit and converts them to analog, amplifies and transmits them. Another option could be to do the split between central and remote unit between Layer 1 and Layer 2 or Medium Access Control (MAC) layer, which is a sub-layer of Layer 2. The MAC sub-layer provides addressing and channel access control mechanisms that make it possible for several terminals or network nodes to communicate within a multiple access network that incorporates a shared medium. In the C-RAN architecture signal generation/detection may be performed at the remote unit. The physical layer defines the means of transmitting raw bits rather than logical data packets over a physical link connecting network nodes. The bit stream may be grouped into code words or symbols and converted to a physical signal that is transmitted over a transmission medium. The physical layer provides an electrical, mechanical, and procedural interface to the transmission medium. The shapes and properties of the electrical connectors, the frequencies to broadcast on, the modulation scheme to use and similar low-level parameters, are specified here. Steps associated with higher layers, such as multiuser scheduling, may be performed at the baseband processing unit attached to the respective remote unit.

### Summary

Embodiments of the present invention are based on the finding that there are scenarios in which it may be beneficial to share the baseband processing performed by a particular central unit coupled to an associated remote unit among a plurality of central units of a communication network. That is to say, in embodiments a network is considered where partial or full hardware pooling is used, i.e., the processing traditionally performed in the base stations is moved into a central unit which is connected via high-speed data links to spatially distributed antennas. More specifically, we consider a scenario where some of the base stations or cells are using a pooled BaseBand Unit (BBU) while some other base stations or cells are using a local or cell-specific BBU. Thereby, baseband processing tasks of a local BBU may be split or shared among the local BBU and the pooled BBU, for example.

According to a first aspect of the present invention, an apparatus is provided according to claim 1.

As has been mentioned before, the first baseband processing unit and the first remote unit may form a distributed base station of the mobile communication network. Thereby, the remote unit and the baseband processing unit, which may also be referred to as central unit of the base station, may be located at different geographical locations. That is to say, the first baseband unit and the first remote unit may be geographically separated and may be interconnected, for example, by fiber optics or any other wired link. In some embodiments the first remote unit and the first baseband or central unit may also be interconnected using a wireless link, for example, a high data rate radio connection.

The base station formed by the first baseband unit and the first remote unit is coupled to the second baseband or central unit, which again may be located at a different geographical location than the first central unit. That is to say, the second central unit may be regarded a central unit remote from the first central unit. While the first baseband unit may be dedicated only to the first remote unit and its served cell, the second baseband unit may be a central baseband processing unit of the mobile communication network for performing baseband data processing for a plurality and possibly varying of cells of the mobile communication network. Again, the interconnection between the first base station, formed by first remote and central unit, and the second central unit may be realized by any wired or wireless connection concept. To enable high-speed data transfers between the first base station and the second central baseband processing unit, a wired high-speed link is, however, preferable. This may be realized, for example, by optical fiber links of a backhaul network between the different baseband units.

The mentioned mobile communication network may, for example, correspond to one of the mobile communication systems standardized by the Third Generation Partnership Project (3GPP), such as the Universal Terrestrial Radio Access Network (UTRAN) or Evolved UTRAN (E-UTRAN) for example Universal Mobile Telecommunication System (UMTS), Long-Term Evolution (LTE) or LTE-Advanced (LTE-A) or mobile communication systems according to different standards, such as for example the Worldwide Interoperability for Microwave Access (WIMAX IEEE 802.16) or Wireless Local Area Network (WLAN IEEE 802.11), generally any system based on Code Divisional Multiple Access (CDMA), Orthogonal Frequency Division Multiple Access (OFDMA) or any other future technology with a multiplexing capable physical layer like Filter Bank Based Multi-Carrier (FBMC) systems. In the following the terms Mobile Communication System and Mobile Communication Network are used synonymously.

The first remote unit, which may also be referred to as first RRH, is operable to communicate with a plurality of mobile units associated to the remote unit using multiplexed radio signals. The communication may take place over an air interface in line with any of the above-mentioned mobile communication systems. In embodiments, the remote unit may serve one or more radio cells, i.e., provide radio signals to mobile units, which establish one more radio cells. Thereby, the term cell or radio cell refers to a coverage area of radio services provided by a base station through its one or more remote units. A base station and/or a remote unit may operate multiple cells, in some embodiments a cell may correspond to a sector. Thereby, sectors may be realized by using sector antennas, which provide an antenna characteristic covering an angular section around a remote unit. In some embodiments, a remote unit may, for example, operate three or six cells covering sectors of 120° (in case of three cells), 60° (in case of six cells), respectively. A mobile unit, which may also be referred to as User Equipment (UE) according to the 3GPP terminology, may be registered with a cell, i.e., it may be associated to a cell such that data may be exchanged between the network and the mobile unit in the coverage area of the associated cell. A radio cell is thus operated by a base station via a remote unit and can be regarded as a coverage area which may be identified through reference or broadcast channels with a respective identification, as, for example, the Common Pilot Channel (CPICH) in UMTS.

On the other hand, the first remote unit is also operable or configured to communicate or exchange data with its associated first central baseband processing unit. Before a baseband-to-RF-conversion (downlink) or after a RF-to-baseband-conversion (uplink), the first remote unit may exchange baseband data with its associated first central unit, or, as will become apparent, directly or indirectly also with the second central unit. For the purpose of data exchange between RRHs and central units an interface known as the Common Public Radio Interface (CPRI) may be used, for example.

A baseband signal processing unit or central can also be understood as a processing node of a baseband signal processing network comprising the first (central) baseband signal processing unit and the second (central) baseband signal processing unit. For exchanging data between the first and the second central units an interface, such as the X2-interface, may be used, for example.

In embodiments each baseband processing or central unit may comprise a plurality of dedicated user processors, wherein each of the dedicated user processors is operable to process all user-specific data from S1 termination up to the user part of the physical layer being associated to the radio cell served by at least one remote unit which is coupled to the respective central unit. Thereby, user-specific data may also be understood as bearer-specific data. That is to say, the user-specific data or data streams may refer to different radio bearers, a radio bearer being a protocol context for a data service of a user. In other words, a user may utilize multiple services, which are provided using different radio bearers. In UMTS or LTE the physical layer (Layer 1 or PHY), the medium access control layer (Layer 2 or MAC), the RLC-layer and the RRC may be involved. All of these network protocol layers have been standardized by the 3GPP and their respective specifications are published and are considered to be well-known in the sequel of this specification.

The baseband data processing at the first central baseband processing unit for the one or more mobile units associated to the first remote unit results in a certain signal processing load or a certain signal processing latency at the first central baseband processing unit. Such load or latency conditions may be prohibitive for the operation of the mobile communication system, in particular, if the signal processing at the first central baseband processing unit overloads its capabilities.

Hence, embodiments of the present invention suggest that the cell- or remote-unit-specific baseband signal processing can be split between several central units as a function of the selected splitting mode. Thereby, the splitting mode may be selected in dependence on baseband data processing capabilities (i.e. computing power) of the first and/or the second central baseband processing unit and/or in dependence on required timing or Quality-of-Service (QoS) parameters of the mobile communication network and/or in dependence on data transport capabilities of a backhaul network between the first and the second baseband processing unit. That is to say, the baseband processing may be split for example as a function of the specific throughput/latency allowed by the backhaul network or mobile communication network deployed.

The splitting mode may be selected or changed by the first remote unit, for example, if it realizes that its associated central unit is unable to deliver all cell specific baseband data in due time. In other embodiments the splitting mode may be chosen at a higher network entity, such as, for example, a base station controller entity having information on a computational load of the first and/or the second central unit. In some embodiments the first central unit itself may decide on the splitting mode, i.e., whether it wishes to perform all the cell specific baseband data processing or whether it wishes to outsource some of it to the remote second central unit.

In some embodiments the selected splitting mode may be conveyed, e.g. to the remote and/or the first central unit, by means of a splitting message, which may be a network message e.g. originating from a higher network entity. The apparatus' splitting module may be operable to process the splitting message comprising a splitting mode indicator and a network address of the second central baseband processing unit. Thereby the splitting mode indicator may indicate which part of the baseband data processing for the first remote unit is to be performed by the associated first central baseband unit and which part of the baseband data processing for the first remote unit is to be performed by the second, remote central baseband unit having the signaled network address

According to an embodiment, a part of a network protocol stack may be implemented or processed locally at the first central baseband unit while another part is processed remotely by the second central baseband unit. In other words, the baseband data processing for the first remote unit may comprise lower layer protocol stack processing parts and higher layer protocol stack processing parts for the one or more mobile units associated to or served by the first remote unit.

In some embodiments the splitting module may be operable to initiate, in accordance with the selected or indicated splitting mode, the relocation of the lower and/or the higher layer protocol stack processing from the first central baseband processing unit to the second central baseband processing unit being remote to the first central unit. Thereby, a network operator is allowed to route part of the baseband processing from the local first baseband unit to the second, e.g. central, baseband unit of the communication network. In a given embodiment, this routing could be exploited during traffic peaks to offload some of the user- or cell-specific processing from the local first to another baseband unit.

Other embodiments of the present invention may also be used to reconfigure the mobile communication network, for example, after an update of a backhaul technology. For example, after an update of a small cell's backhaul connection from Asymmetric Digital Subscriber Line (ADSL) to Passive Optical Network (PON), the small cell could be reconfigured to use a PHY/MAC splitting, i.e., to perform the lower layer PHY processing locally at the first baseband processing unit and the higher layer MAC processing in the second, centralized baseband processing unit. While ADSL is a data communications technology that enables faster data transmission over copper telephone lines than a conventional voiceband modem can provide, a PON is a point-to-multipoint fiber to the premises network architecture in which unpowered optical splitters are used to enable a single optical fiber to serve multiple premises. A PON consists of an optical line terminal

(OLT) at the service provider's central office and a number of optical network units (ONUs) near end users. A PON reduces the amount of fiber and central office equipment required compared with point-to-point architectures. A passive optical network is a form of fiber-optic access network. After an update from PON to Peer-to-Peer (P2P) fiber connection, the small cell could be reconfigured to route all stack processing to the second, centralized baseband processing unit.

That is to say, the splitting module may be operable, in accordance with a first splitting mode, to initiate the relocation of the higher layer protocol stack processing from the first central baseband unit to the second central baseband unit, such that the lower layer protocol stack processing for the first remote unit is performed locally by the first central baseband unit and the higher layer protocol stack processing for the first remote is performed remotely by the second central baseband unit. Also, the splitting module may be operable, in accordance with a second splitting mode, to initiate the relocation of the lower and the higher layer protocol stack processing from the first baseband unit to the second baseband unit, such that the lower and the higher layer protocol stack processing for the first remote is performed remotely by the second baseband unit.

As has been explained before, the lower layer protocol stack processing may comprise Layer-1 data processing (without any higher layers), whereas the higher layer protocol stack processing may comprise Layer-2 and/or Layer-3 data processing (without any lower layers).

According to a further aspect, embodiments of the present invention also provide a mobile communication network comprising a first local baseband unit coupled to a first remote unit, wherein the first local baseband unit is operable to perform baseband data processing for one or more mobile units associated to the first mode unit. Further, the mobile communication network comprises a second remote baseband unit, which may be a central baseband processing unit for the mobile communication network or of a part thereof. Also, the mobile communication network comprises a splitting module which is operable to initiate, in accordance with a selected splitting mode, a relocation of at least a part of the baseband data processing for the one or more mobile units associated to the first remote unit from the first local baseband unit to the second remote baseband unit.

In embodiments, the splitting module may, in principle, be located anywhere in the mobile communication network. It may comprise analog and/or digital network routing and/or network switching circuitry. In some embodiments, the splitting module may be part of the first baseband unit such that at least a part of the baseband data may be routed from the first baseband unit to the second baseband unit depending on the selected splitting mode. In other embodiments, the splitting module may also be part of the first remote unit, i.e., the splitting module may be situated within or at the first remote unit. This may be particularly useful in embodiments where the remote unit is operable to perform a transmission band to baseband conversion (for the uplink) and/or a baseband to transmission band conversion (for the downlink). Here, at least a part of the baseband data of the one or more mobile units associated to the first remote unit may be directly routed from the first remote unit to the second baseband processing unit (and vice versa) depending on the selected splitting mode. For example, if the selected splitting mode indicates that a first part of the baseband data processing should be performed by the first remote unit, the corresponding first part of the baseband data may be routed to the first remote unit. Instead, a second part of the baseband data which is to be processed by the second baseband processing unit may be directly routed to the second baseband processing unit from the first remote unit.

According to yet a further aspect of the present invention, it is provided a method according to claim 11.

Some embodiments comprise one or more programmable electrical control circuits installed within the apparatus for the mobile communication network for performing the above method. Such a programmable electrical control circuit, for example a Digital Signal Processor (DSP), a Field Programmable Gate Array (FPGA), or a general purpose processor with hardware accelerators, for example, needs to be programmed accordingly. Hence, yet further embodiments also provide a computer program having a program code for performing embodiments of the method, when the computer program is executed on the programmable hardware device, the program according to claim 12. There is also a network according to claim 13.

One benefit of embodiments is that a network operator may be enabled to route part of the baseband processing from a local baseband unit of a base station to a central baseband unit of the mobile communication network. This may be realized by predefining one or more splitting modes and a related network signaling. In order to allow intervendor interoperability, the splitting modes and the related signaling in the network may be standardized, for example, by 3GPP. Embodiments of the present invention allow a mapping of different baseband processing tasks from any base station to any baseband unit in a given mobile communication network.

### Brief description of the Figures

Some embodiments of apparatuses and/or methods will be described in the following by way of example only, and with reference to the accompanying figures, in which
- Fig. 1: shows a schematic block diagram of an apparatus for a mobile communication network according to an embodiment, the apparatus comprising a splitting module for splitting at least a part of the baseband data processing between at least two baseband units;
- Fig. 2: shows an example of a network deployment according to an embodiment;
- Fig. 3a: shows an example of different splitting modes;
- Fig. 3b: shows an embodiment of a splitting or reconfiguration message; and
- Fig. 4: illustrates a schematic flowchart of a method according to an embodiment of the present invention.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.,* "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

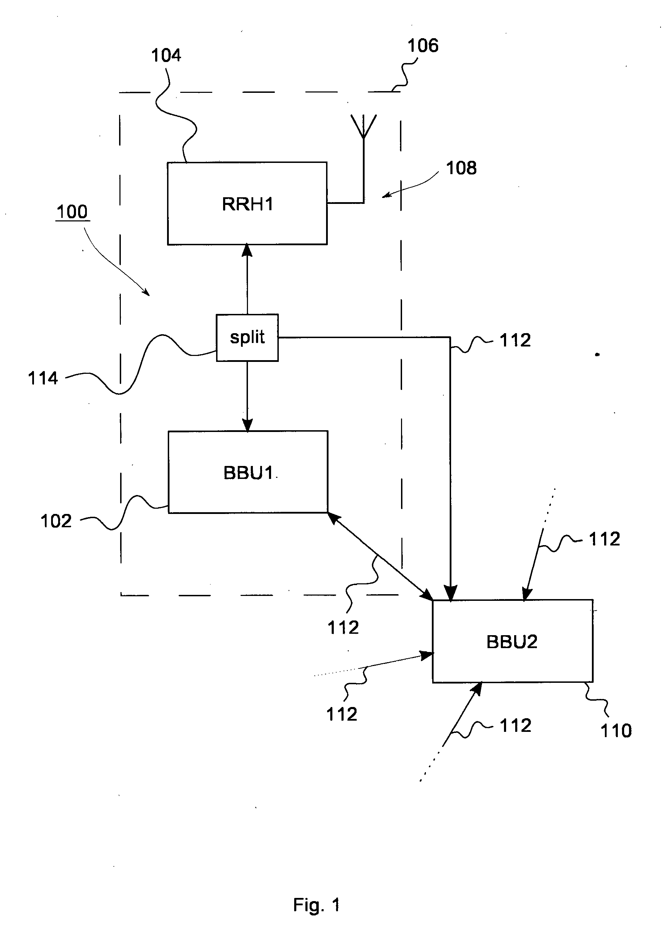

Fig. 1 schematically illustrates an apparatus 100 for a mobile communication network according to an embodiment.

The mobile communication network comprises a first baseband processing unit 102 which is coupled to a first remote radio unit 104. Although the first baseband unit 102 and the first remote radio unit 104 may be located at completely different geographical locations or positions, they form a distributed base station 106 of the mobile communication network, which may be configured having a C-RAN architecture. Thereby, the distributed base station 106 serves, via the remote radio unit 104 and corresponding electrical RF-circuitry 108 installed therein, a radio cell of the mobile communication network. The first remote unit 104 may be configured as a remote radio head (RRH). The RRH 104 may be understood as an operator radio control panel that connects to a remote radio transceiver via electrical or wireless interface. In wireless system technology, such as GSM, CDMA, UMTS, LTE, such radio equipment may be deployed remote to the baseband processing unit 102, which may also be regarded as the central baseband unit of the distributed base station 106. The first baseband unit 102 is operable or configured to perform baseband data processing for one or more mobile units associated to the radio cell served via the first remote radio unit 104. That is to say, while the first remote radio unit 104 is configured to transmit and/or receive RF signals from mobile units of the radio cell and to convert the RF signals into the digital baseband domain, the first baseband unit 102 is configured to perform cell- and, in particular, user- or bearer-specific baseband processing including lower layer and higher layer protocol stack processing. Thereby, different layers of the protocol stack may be defined according to the well-known OSI-reference model (OSI = Open Systems Interconnection).

The mobile communication network further comprises a second baseband unit 110, which may be located geographically remotely from the first baseband unit 102, and which is coupled to the distributed base station 106 and other network entities (not shown) via backhaul network connections 112. These backhaul network connections 112 may be realized via wired connections, such as fiber optic cables, for example. While the first baseband unit 102 is fixedly dedicated to one or more radio cells served by its associated first remote unit 104, the second baseband processing unit 110 may serve a variably configurable plurality of radio cells served by other, second remote radio units (not shown). This means that the second baseband processing unit 110 may, in some embodiments, act as a central baseband unit taking over baseband signal processing tasks of other, local, baseband units, such as the baseband unit 102. As already explained, the second baseband unit 110 may be located at a distant geographical position from the first baseband unit 102 and the first remote radio unit 104. In embodiments, the second baseband processing unit 110 may be a network node being located hundreds of meters or even kilometers away from the first baseband unit 102 local to the RRH 104.

The apparatus 100, which may be a network element associated to the distributed base station 106, comprises a splitting module 114 which is operable or configured to initiate, in accordance with a selected or given splitting mode, a relocation or splitting of at least a part of the baseband data processing for the one or more mobile units associated to the first remote unit 104 from the local first baseband unit 102 to the remote second baseband unit 110. That is to say, the splitting module 114 may be configured to route at least a part of the digital baseband data from the remote unit 104 and/or the first baseband unit 102 to the second baseband unit 110 and vice versa. The selected or given splitting mode, which may define which part of the baseband data processing related to the first remote unit 104 (or its cell) is to be performed by the first baseband unit 102 and which other part of the baseband data processing related to the first remote unit 104 (or its cell) is to be performed by the second baseband unit 110, may be selected by the base station 106 itself or by a higher layer network entity controlling the base station 106.

Thereby, the splitting mode may be selected or determined in dependence on baseband data processing capabilities of the first and/or the second baseband unit 102, 110, according to some embodiments. For example, if a maximum computational load of the first baseband unit 102 is reached, the distributed base station 106 or a higher level network entity may decide to distribute some of the data processing load from the first baseband entity 102 to the remote second baseband unit 110 of the network. Additionally, or alternatively, the splitting mode may be dependent on some required timing parameters of the mobile communication network, for example, in order to fulfill certain latency or data rate requirements in the communication system. Another reason for the distribution of baseband processing load between the separate baseband units 102 and 110 may be a certain required minimum data throughput of the mobile communication network. That is to say, the splitting mode may be selected also in dependence on specific Quality of Service (QoS) parameters of the communication system. Furthermore, it may be the case that the backhaul network and its node connections 112 have only limited data transport capabilities. For example, the backhaul network may only allow for a maximum data rate in its backhaul connections 112 such that it may be preferable to split the baseband processing tasks and related data traffic between different baseband units 102 and 110.

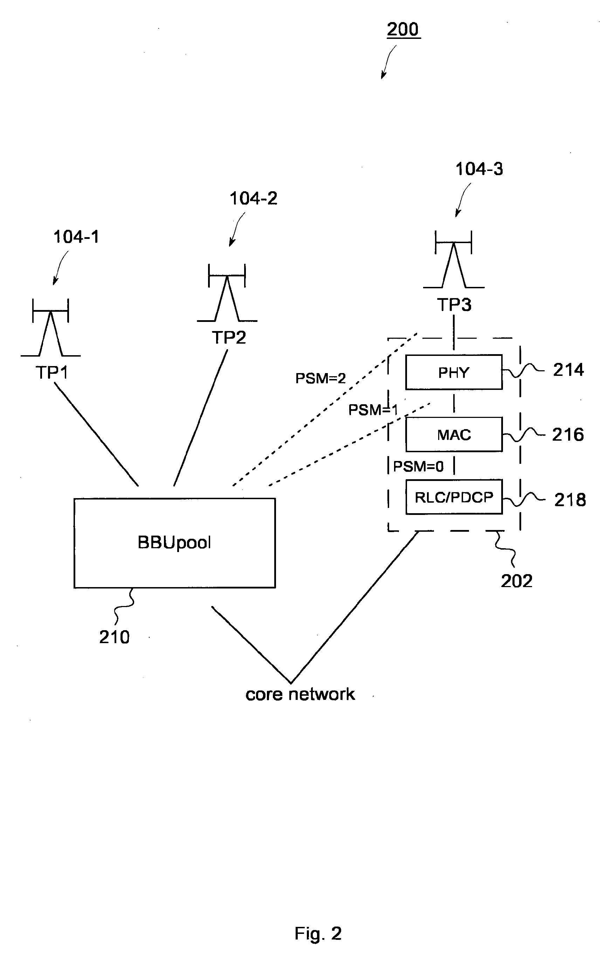

Fig. 2 schematically shows a mobile communication network 200 configured according to an embodiment of the present invention.

The mobile communication network 200 comprises a plurality of transmission points or remote radio units 104-1, 104-2 and 104-3. The transmission points or remote radio units 104 may each serve a different radio cell of the mobile communication network. In the exemplary embodiment of Fig. 2, the remote radio units 104-1 and 104-2 are coupled to a central baseband unit pool 210 which may comprise one or more digital baseband processing units. Instead, the remote radio unit 104-3 is coupled to an associated baseband unit 202 which serves for baseband data processing according to different layers of a network protocol stack for one or more mobile units associated to the remote unit 104-3. That is to say, the baseband data processing for the remote unit 104-3 (or its served cell) comprises lower layer protocol stack processing, such as Layer 1 or PHY layer processing, and higher layer protocol stack processing, such as Layer 2 and/or Layer 3 processing. Even higher network protocol layers are possible. The local baseband processing unit 202, which is dedicated to its associated remote unit 104-3, may hence comprise digital baseband processing circuitry for lower layer protocol stack processing as well as for higher layer protocol stack processing. As indicated by reference numeral 214 the baseband unit 202 comprises a PHY layer processor. Furthermore, the baseband unit 202 comprises MAC-layer processing circuitry 216 and a RLC-layer processing circuitry 218 (RLC = Radio Link Control).

A splitting module, which is not explicitly shown in Fig. 2, but which may be implemented in the local baseband unit 202, in the associated remote unit 104-3 or in between the two units 202 and 104-3 forming a distributed base station, may be operable to initiate, in accordance with a selected splitting mode "PSM", the relocation of the lower and/or the higher layer protocol stack processing from the local baseband unit 202 to the central baseband unit 210.

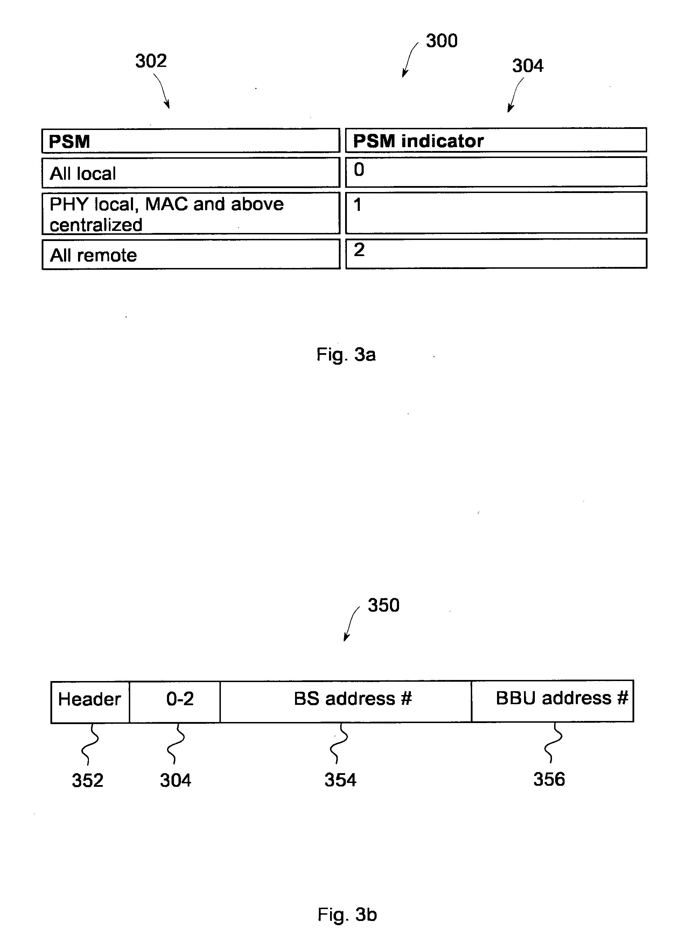

In one embodiment, three different processing splitting modes PSM, which are summarized in the table depicted in Fig. 3a, may be considered. According to a first splitting mode referred to as 'all local' both lower and higher layer protocol stack processing for the remote unit 104-3 may be performed at the local baseband unit 202. According to a second splitting mode referred to as 'PHY local, MAC and above centralized' only the higher layer protocol stack processing for the remote unit 104-3 may be relocated or forwarded from the local baseband unit 202 to the central baseband cluster 210, such that the lower layer protocol stack processing (PHY) for the remote unit 104-3 is still performed by the local baseband processing unit 202 and the higher layer protocol stack processing (MAC, RLC) for the remote unit 104-3 is performed at the central baseband processing cluster 210. When a third splitting mode referred to as 'all remote' is selected, the splitting module initiates the relocation of both the lower and the higher layer protocol stack processing, i.e., PHY, MAC, RLC/PDCP (Packet Data Convergence Protocol), from the local baseband unit 202 to the central baseband cluster 210, such that both the lower and the higher protocol stack processing for the remote unit 104-3 are performed at the central baseband unit cluster 210.

For deciding which part of the baseband processing is to be performed at which baseband unit 202, 210, the splitting module may be operable to process a dedicated network message, i.e. a splitting message comprising a splitting mode indicator and a network address of the target baseband unit, i.e. the baseband unit to which part of the baseband processing shall be transferred. As can be seen from the right-hand side of the table 300 of Fig. 3a, the Splitting Mode Indicator (PSM Indicator) may indicate which first part of the baseband processing for the remote unit 104-3 is to be performed by the local baseband unit 202 and which second part of the baseband processing for the remote unit 104-3 is to be performed by the network's central baseband processing cluster 210. The PSM indicator referred to as '0' indicates the case where the full protocol stack shall be realized in the local BBU 202. The PSM indicator referred to as '1' indicates splitting the protocol stack into two parts, realizing the PHY locally at the local BBU 202 and the MAC (and possibly further layers above) in the remote BBU 210. The PSM indicator referred to as '2' refers to implementing all the baseband processing of all network protocol layers for the RRH 104-3 in the remote BBU cluster 210.

In some embodiments it may be assumed that distributed base stations and/or baseband units thereof can be referred to by means of network addresses. Moreover, it may be assumed that any of the base stations in a network or sub-network can be assigned to any of the baseband units in the network or sub-network. According to embodiments, this may be achieved, for example, by sending a reconfiguration or splitting message 350 to a given distributed base station, e.g. the base station formed by the local baseband unit 202 and its associated remote unit 104-3.

An example of such a splitting message 350 is sketched in Fig. 3b.

As may be seen, the splitting message 350 may comprise a network protocol specific header field 352 and payload comprising the PSM indicator 304 (e.g. '0', '1' or '2'), a source base station address 354 (e.g. the network address of the base station formed by the local baseband unit 202 and its associated remote unit 104-3) and a target BBU address 356 (e.g. the network address of BBU cluster 210). This splitting message 350, which may e.g. originate from a higher level network entity, may be evaluated by a splitting module associated to the source base station, i.e., the distributed base station comprising a remote unit and a local baseband unit. The splitting message 350 may thereby find its way to the source base station by means of the base station address 354. As has been explained above, the source base station or its associated splitting module may evaluate the splitting mode indicator 304 indicating which part of the baseband data processing for the associated remote unit 104-3 is to be performed by the local baseband processing unit 202 and which part of the baseband data processing for the remote unit 104-3 is to be performed by the remote baseband processing unit 210 having the signaled network address 356.

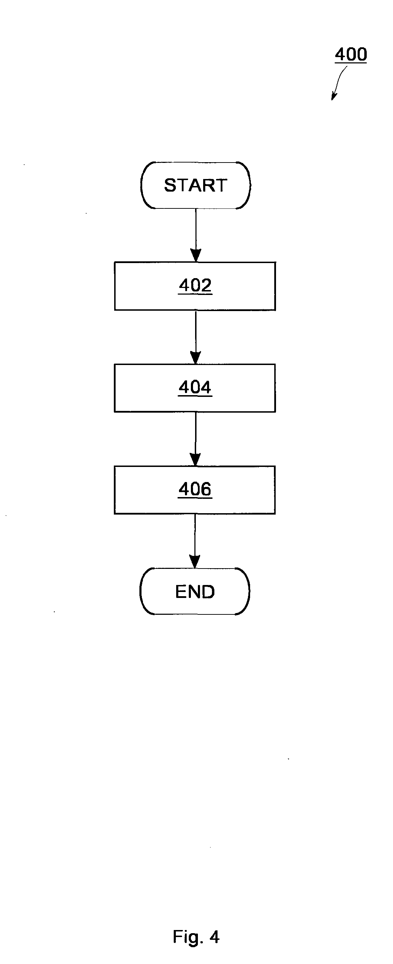

Fig. 4 illustrates a method 400 for a mobile communication network, according to an embodiment of the present invention. As has been explained before, the mobile communication network comprises a first baseband unit coupled and dedicated to a first remote (radio) unit, wherein the first baseband and remote unit form a distributed base station. The first baseband processing unit is operable to perform baseband data processing for one or more mobile units associated to the first remote unit. Further, the mobile communication network comprises a second baseband unit, which may be located away from the first baseband unit and which may not only be dedicated to the first remote unit, but also to second remote (radio) units.

The method 400 comprises a first optional step of receiving 402, at the distributed base station, a splitting message comprising a splitting mode indicator and a network address of the second baseband unit, wherein the splitting mode indicator indicates which first part of the baseband data processing for the first remote unit is to be performed by the first baseband unit and which second part of the baseband data processing for the first remote unit is to be performed by the second baseband unit having the signaled network address. In a further optional step 404 the splitting mode indicator is evaluated to obtain a selected splitting mode. In a step 406, a relocation or transfer of the second part of the baseband data processing for the first remote unit from the first baseband unit to the second baseband unit is initiated in accordance with the selected splitting mode.

Some embodiments of the present invention may also be used to route only parts (e.g. only signals of specific users) of the baseband data from one BBU to another BBU, for example in case of coordinated multipoint concepts. Coordinated multipoint or cooperative MIMO is one of the promising concepts to improve cell edge user data rate and spectral efficiency beyond what is possible with MIMO-OFDM in the first versions of LTE or WiMAX. Interference can be exploited or mitigated by cooperation between sectors or different sites. Significant gains can be shown for both the uplink and downlink. In this context, signals from different cells may be jointly processed at a common BBU, for example, to mitigate inter-cell interference or the like. This means the operation would be a hybrid between different architectures, because only parts of the user could benefit.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. An apparatus (100) for a mobile communication network, the mobile communication network comprising a first baseband unit (102; 202) coupled to a first remote unit (104) and comprising a second baseband unit (110; 210), wherein the first baseband unit (102; 202) is operable to perform baseband data processing for one or more mobile units associated to the first remote unit (104), the apparatus comprising:
a splitting module (114) operable to initiate, in accordance with a selected splitting mode, a relocation of at least a part of the baseband data processing for the one or more mobile units associated to the first remote unit from the first baseband unit (102; 202) to the second baseband unit (110; 210),
**characterized in that**
the splitting module (114) is operable to process a splitting message comprising a splitting mode indicator (304) and a network address (356) of the second baseband unit (110; 210), wherein the splitting mode indicator (304) indicates which first part of the baseband data processing for the first remote unit (104) is to be performed by the first baseband unit (102; 202) and which second part of the baseband data processing for the first remote unit (104) is to be performed by the second baseband unit (110; 210) having the network address (356).

2. The apparatus (100) according to claim 1, wherein the baseband data processing for the first remote unit (104) comprises lower layer protocol stack processing and higher layer protocol stack processing for the one or more mobile units associated to the first remote unit (104), wherein the splitting module (114) is operable to initiate, in accordance with the selected splitting mode, the relocation of the lower and/or the higher layer protocol stack processing from the first baseband unit (102; 202) to the second baseband unit (110; 210).

3. The apparatus (100) according to claim 2, wherein the splitting module (114) is operable, in accordance with a first splitting mode, to initiate the relocation of the higher layer protocol stack processing from the first baseband unit (102; 202) to the second baseband unit (110; 210), such that the lower layer protocol stack processing for the first remote unit (104) is performed by the first baseband unit (102; 202) and the higher layer protocol stack processing for the first remote unit (104) is performed by the second baseband unit (110; 210).

4. The apparatus (100) according to claim 2, wherein the splitting module (114) is operable, in accordance with a second splitting mode, to initiate the relocation of the lower and the higher layer protocol stack processing from the first baseband unit (102; 202) to the second baseband unit (110; 210), such that the lower and the higher layer protocol stack processing for the first remote unit (104) is performed by the second baseband unit (110; 210).

5. The apparatus (100) according to claim 2, wherein the lower layer protocol stack processing comprises Layer-1 data processing and wherein the higher layer protocol stack processing comprises Layer-2 and/or Layer-3 data processing.

6. The apparatus (100) according to claim 1, wherein the splitting mode is selected in dependence on baseband data processing capabilities of the first and/or second baseband unit (102; 202; 110; 210) and/or in dependence on required timing parameters of the mobile communication network and/or in dependence on data transport capabilities of a backhaul network between the first and the second baseband unit (102; 202; 110; 210).

7. The apparatus (100) according to claim 6, wherein the required timing parameters are selected from the group comprising required data throughput and required latency.

8. The apparatus (100) according to claim 1, wherein the first baseband unit (102; 202) is fixedly dedicated to one or more radio cells served by the first remote unit (104), and wherein the second baseband unit (110; 210) is serving a variably configurable plurality of radio cells of the mobile communication network.

9. The apparatus (100) according to claim 1, wherein the baseband data processing comprises uplink- and/or downlink baseband data processing for one or more mobile units associated to a cell served by the first remote unit (104), which is a remote radio unit.

10. The apparatus (100) according to claim 1, wherein the first baseband unit (102; 202), the first remote unit (104) and the second baseband unit (110; 210) are located at different geographical locations, respectively, wherein the first baseband unit (102; 202) and the first remote unit (104) form a distributed base station of the mobile communication network, wherein the distributed base station is coupled to the second, remote baseband unit (110; 210).

11. A method (400) for a mobile communication network, the mobile communication network comprising a first baseband unit (102; 202) coupled to a first remote unit (104) and comprising a second baseband unit (110; 210), wherein the first baseband unit (102; 202) is operable to perform baseband data processing for one or more mobile units associated to the first remote unit (104), the method comprising:
initiating (406), in accordance with a selected splitting mode, a relocation of at least a part of the baseband data processing for the one or more mobile units associated to the first remote unit (104) from the first baseband unit (102; 202) to the second baseband unit (110; 210),
**characterized in that**
initiating (406) the relocation comprises processing a splitting message comprising a splitting mode indicator (304) and a network address (356) of the second baseband unit (110; 210), wherein the splitting mode indicator (304) indicates which first part of the baseband data processing for the first remote unit (104) is to be performed by the first baseband unit (102; 202) and which second part of the baseband data processing for the first remote unit (104) is to be performed by the second baseband unit (110; 210) having the network address (356).

12. A computer program having a program code for performing the steps of the method (400) according to claim 11, if the computer program is executed on a programmable hardware device.

13. A mobile communication network, comprising:
a first baseband unit (102; 202) coupled to a first remote unit (104), wherein the first baseband unit (102; 202) is operable to perform baseband data processing for one or more mobile units associated to first remote radio unit (104);
a second baseband processing unit (110; 210); and
a splitting module (114) operable to initiate, in accordance with a selected splitting mode, a relocation of at least a part of the baseband data processing for the one or more mobile units associated to the first remote unit (104) from the first baseband unit (102; 202) to the second baseband unit (110; 210),
**characterized in that**
the splitting module (114) is operable to process a splitting message comprising a splitting mode indicator (304) and a network address (356) of the second baseband unit (110; 210), wherein the splitting mode indicator (304) indicates which first part of the baseband data processing for the first remote unit (104) is to be performed by the first baseband unit (102; 202) and which second part of the baseband data processing for the first remote unit (104) is to be performed by the second baseband unit (110; 210) having the network address (356).

14. The mobile communication network according to claim 13, wherein the second baseband unit (110; 210) is a central baseband unit of the mobile communication network for performing baseband data processing for a plurality of radio cells of the mobile communication network.

## Patentansprüche

1. Vorrichtung (100) für ein mobiles Kommunikationsnetzwerk, wobei das mobile Kommunikationsnetzwerk eine erste Basisbandeinheit (102; 202) umfasst, die an eine erste entfernte Einheit (104) gekoppelt ist, weiterhin eine zweite Basisbandeinheit (110; 210) umfassend, wobei die erste Basisbandeinheit (102; 202) operativ ist für das Ausführen von Basisbanddatenverarbeitung für eine oder mehrere mobile Einheiten, die der ersten entfernten Einheit (104) zugewiesen sind, wobei die Vorrichtung umfasst:
ein Splittingmodul (114), ausgelegt dafür, um im Einklang mit einer ausgewählten Splittingmethode eine Verlagerung von der ersten Basisbandeinheit (102; 202) zur zweiten Basisbandeinheit (110; 210) zumindest eines Teils der Basisbanddatenverarbeitung für eine oder mehrere mobile Einheiten einzuleiten, die der ersten entfernten Einheit zugeordnet sind,
**dadurch gekennzeichnet, dass**
das Splittingmodul (114) ausgelegt ist für das Bearbeiten einer Splittingmitteilung, die einen Splittingmethodenindikator (304) und eine Netzwerkadresse (356) einer zweiten Basisbandeinheit (110; 210) umfasst, wobei der Splittingmethodenindikator (304) angibt, welcher erste Teil der Basisbanddatenverarbeitung für die erste entfernte Einheit (104) von der ersten Basisbandeinheit (102; 202) auszuführen ist, und welcher zweite Teil der Basisbanddatenverarbeitung für die erste entfernte Einheit (104) von der zweiten, über die Netzwerkadresse (356) verfügenden Basisbandeinheit (110; 210).

2. Vorrichtung (100) nach Anspruch 1, wobei die Basisbanddatenverarbeitung für die erste entfernte Einheit (104) Stapelverarbeitung per Lower-Layer-Protokoll und Stapelverarbeitung per Higher-Layer-Protokoll für die eine oder mehreren mobilen Einheiten umfasst, die der ersten entfernten Einheit (104) zugewiesen sind, wobei das Splittingmodul (114) dafür ausgelegt ist, um in Übereinstimmung mit der ausgewählten Splittingmethode die Verlagerung der Stapelverarbeitung per Higher- oder Lower-Layer-Protokoll von der ersten Basisbandeinheit (102; 202) zur zweiten Basisbandeinheit (110; 210) einzuleiten.

3. Vorrichtung (100) nach Anspruch 2, wobei das Splittingmodul (114) dafür ausgelegt ist, um in Übereinstimmung mit einer ersten Splittingmethode die Verlagerung der Stapelverarbeitung per Higher-Layer-Protokoll von der ersten Basisbandeinheit (102; 202) zur zweiten Basisbandeinheit (110; 210) einzuleiten, dergestalt, dass die Stapelverarbeitung per Lower-Layer-Protokoll für die erste entfernte Einheit (104) von der ersten Basisbandeinheit (102; 202) ausgeführt wird und die Stapelverarbeitung per Higher-Layer-Protokoll für die erste entfernte Einheit (104) von der zweiten Basisbandeinheit (110; 210).

4. Vorrichtung (100) nach Anspruch 2, wobei das Splittingmodul (114) dafür ausgelegt ist, um in Übereinstimmung mit einer zweiten Splittingmethode die Verlagerung der Stapelverarbeitung per Lower- und Higher-Layer-Protokoll von der ersten Basisbandeinheit (102; 202) zur zweiten Basisbandeinheit (110; 210) einzuleiten, dergestalt, dass die Stapelverarbeitung per Lower- und Higher-Layer-Protokoll für die erste entfernte Einheit (104) von der zweiten Basisbandeinheit (110; 210) ausgeführt wird.

5. Vorrichtung (100) nach Anspruch 2, wobei die Stapelverarbeitung per Lower-Layer-Protokoll die Verarbeitung von Layer-1-Daten umfasst und wobei die Stapelverarbeitung per Higher-Layer-Protokoll die Verarbeitung von Layer-2- und/oder Layer-3-Daten umfasst.

6. Vorrichtung (100) nach Anspruch 1, wobei die Splittingmethode in Abhängigkeit von den Basisbanddatenverarbeitungs-Kapazitäten der ersten und/oder zweiten Basisbandeinheit (102; 202; 110; 210) ausgewählt wird, und/oder in Abhängigkeit von erforderlichen Timingparametern des mobilen Kommunikationsnetzwerks, und/oder in Abhängigkeit von den Datentransportkapazitäten eines Backhaul-Netzwerks zwischen der ersten und der zweiten Basisbandeinheit (102; 202; 110; 210).

7. Vorrichtung (100) nach Anspruch 6, wobei die erforderlichen Timingparameter aus einer Gruppe von Daten ausgewählt werden, welche den erforderlichen Datendurchsatz und die erforderliche Latenzzeit enthält.

8. Vorrichtung (100) nach Anspruch 1, wobei die erste Basisbandeinheit (102; 202) fest einer oder mehreren Funkzellen zugeordnet wird, die von der ersten entfernte Einheit (104) bedient werden, und wobei die zweite Basisbandeinheit (110; 210) eine variabel konfigurierbare Vielzahl von Funkzellen des mobilen Kommunikationsnetzwerks bedient.

9. Vorrichtung (100) nach Anspruch 1, wobei die Basisbanddatenverarbeitung Uplink- und/oder Downlink-Basisbanddatenverarbeitung für eine oder mehrere mobile Einheiten umfasst, die einer Zelle zugewiesen sind, die von der ersten entfernten Einheit (104) bedient wird, bei der es sich um eine entfernte Funkeinheit handelt.

10. Vorrichtung (100) nach Anspruch 1, wobei die erste Basisbandeinheit (102; 202), die erste entfernte Einheit (104) und die zweiten Basisbandeinheit (110; 210) sich an geografisch jeweils unterschiedlichen Standorten befinden, wobei die erste Basisbandeinheit (102; 202) mit der ersten entfernten Einheit (104) eine verteilte Basisstation des mobilen Kommunikationsnetzwerks bildet, wobei die verteilte Basisstation an eine zweite, entfernte Basisbandeinheit (110; 210) gekoppelt ist.

11. Verfahren (400) für ein mobiles Kommunikationsnetzwerk, wobei das mobile Kommunikationsnetzwerk eine erste Basisbandeinheit (102; 202) umfasst, die an eine erste entfernte Einheit (104) gekoppelt ist, weiterhin eine zweite Basisbandeinheit (110; 210) umfassend, wobei die erste Basisbandeinheit (102; 202) operativ ist für das Ausführen von Basisbanddatenverarbeitung für eine oder mehrere mobile Einheiten, die der ersten entfernten Einheit (104) zugewiesen sind, wobei das Verfahren umfasst:
im Einklang mit einer ausgewählten Splittingmethode das Einleiten (406) einer Verlagerung von der ersten Basisbandeinheit (102; 202) zur zweiten Basisbandeinheit (110; 210) zumindest eines Teils der Basisbanddatenverarbeitung für eine oder mehrere mobile Einheiten einzuleiten, die der ersten entfernten Einheit (104) zugeordnet sind,
**dadurch gekennzeichnet, dass**
das Einleiten (406) der Verlagerung das Bearbeiten einer Splittingmitteilung umfasst, die einen Splittingmethodenindikator (304) und eine Netzwerkadresse (356) einer zweiten Basisbandeinheit (110; 210) umfasst, wobei der Splittingmethodenindikator (304) angibt, welcher erste Teil der Basisbanddatenverarbeitung für die erste entfernte Einheit (104) von der ersten Basisbandeinheit (102; 202) auszuführen ist, und welcher zweite Teil der Basisbanddatenverarbeitung für die erste entfernte Einheit (104) von der zweiten, über die Netzwerkadresse (356) verfügenden Basisbandeinheit (110; 210).

12. Computerprogramm mit einem Programmcode zur Umsetzung der Schritte des Verfahrens (400) aus Anspruch 11, wenn das Computerprogramm auf einem programmierbaren Hardwaregerät ausgeführt wird.

13. Mobilkommunikationsnetz, umfassend:
eine erste Basisbandeinheit (102; 202), gekoppelt an eine ersten entfernte Einheit (104), wobei die erste Basisbandeinheit (102; 202) ausgelegt ist für das Ausführen von Basisbanddatenverarbeitung für eine oder mehrere mobile Einheiten, die der ersten entfernten Einheit (104) zugeordnet sind.
eine zweite Basisbandeinheit (110; 210); und
ein Splittingmodul (114), ausgelegt dafür, um im Einklang mit einer ausgewählten Splittingmethode eine Verlagerung von der ersten Basisbandeinheit (102; 202) zur zweiten Basisbandeinheit (110; 210) zumindest eines Teils der Basisbanddatenverarbeitung für eine oder mehrere mobile Einheiten einzuleiten, die der ersten entfernten Einheit (104) zugeordnet sind,
**dadurch gekennzeichnet, dass**
das Splittingmodul (114) ausgelegt ist für das Bearbeiten einer Splittingmitteilung, die einen Splittingmethodenindikator (304) und eine Netzwerkadresse (356) einer zweiten Basisbandeinheit (110; 210) umfasst, wobei der Splittingmethodenindikator (304) angibt, welcher erste Teil der Basisbanddatenverarbeitung für die erste entfernte Einheit (104) von der ersten Basisbandeinheit (102; 202) auszuführen ist, und welcher zweite Teil der Basisbanddatenverarbeitung für die erste entfernte Einheit (104) von der zweiten, über die Netzwerkadresse (356) verfügenden Basisbandeinheit (110; 210).

14. Das mobilen Kommunikationsnetzwerk nach Anspruch 13, wobei die zweite Basisbandeinheit (110; 210) eine zentrale Basisbandeinheit des mobilen Kommunikationsnetzwerks für das Ausführen der Basisbanddatenverarbeitung für eine Vielzahl von Funkzellen des mobilen Kommunikationsnetzwerks ist.

## Revendications

1. Appareil (100) pour un réseau de communication mobile, le réseau de communication mobile comprenant une première unité en bande de base (102; 202) connectée à une première unité distante (104) et comprenant une deuxième unité en bande de base (110 ; 210), la première unité en bande de base (102 ; 202) pouvant être utilisée pour exécuter un traitement de données en bande de base pour une ou plusieurs unités mobiles associées à la première unité distante (104), l'appareil comprenant :
un module de division (114) pouvant être utilisé pour initier, conformément à un mode de division sélectionné, une relocalisation d'au moins une partie du traitement de données en bande de base pour la ou les plusieurs unités mobiles associées à la première unité distante de la première unité en bande de base (102 ; 202) vers la deuxième unité en bande de base (110 ; 210),
**caractérisé en ce que**
le module de division (114) peut être utilisé pour traiter un message de division comprenant un indicateur de mode de division (304) et une adresse de réseau (356) de la deuxième unité en bande de base (110 ; 210), l'indicateur de mode de division (304) indiquant quelle première partie du traitement de données en bande de base pour la première unité distante (104) doit être exécutée par la première unité en bande de base (102 ; 202) et quelle deuxième partie du traitement de données en bande de base pour la première unité distante (104) doit être exécutée par la deuxième unité en bande de base (110 ; 210) possédant l'adresse de réseau (356).

2. Appareil (100) selon la revendication 1, avec lequel le traitement de données en bande de base pour la première unité distante (104) comprend le traitement de la pile de protocole de couche inférieure et le traitement de la pile de protocole de couche supérieure pour la ou les plusieurs unités mobiles associées à la première unité distante (104), le module de division (114) pouvant être utilisé pour initier, conformément au mode de division sélectionné, la relocalisation du traitement de la pile de protocole de couche inférieure et/ou supérieure de la première unité en bande de base (102 ; 202) vers la deuxième unité en bande de base (110 ; 210).

3. Appareil (100) selon la revendication 2, avec lequel le module de division (114) peut être utilisé, conformément à un premier mode de division, pour initier la relocalisation du traitement de la pile de protocole de couche inférieure et/ou supérieure de la première unité en bande de base (102 ; 202) vers la deuxième unité en bande de base (110 ; 210) de telle sorte que le traitement de la pile de protocole de couche inférieure pour la première unité distante (104) est exécuté par la première unité en bande de base (102 ; 202) et le traitement de la pile de protocole de couche supérieure pour la première unité distante (104) est exécuté par la deuxième unité en bande de base (110 ; 210).

4. Appareil (100) selon la revendication 2, avec lequel le module de division (114) peut être utilisé, conformément à un deuxième mode de division, pour initier la relocalisation du traitement de la pile de protocole de couche inférieure et supérieure de la première unité en bande de base (102 ; 202) vers la deuxième unité en bande de base (110 ; 210) de telle sorte que le traitement de la pile de protocole de couche inférieure et supérieure pour la première unité distante (104) est exécuté par la deuxième unité en bande de base (110 ; 210).

5. Appareil (100) selon la revendication 2, avec lequel le traitement de la pile de protocole de couche inférieure comprend le traitement des données de couche 1 et avec lequel le traitement de la pile de protocole de couche supérieure comprend le traitement des données de couche 2 et/ou de couche 3.

6. Appareil (100) selon la revendication 1, avec lequel le mode de division est sélectionné en fonction des capacités de traitement des données en bande de base de la première et/ou de la deuxième unité en bande de base (102 ; 202 ; 110 ; 210) et/ou en fonction des paramètres de base de temps exigés du réseau de communication mobile et/ou en fonction des capacités de transport de données d'un réseau de raccordement entre la première et la deuxième unité en bande de base (102; 202; 110; 210).

7. Appareil (100) selon la revendication 6, avec lequel les paramètres de base de temps exigés sont sélectionnés dans le groupe comprenant le débit de données exigé et la latence exigée.

8. Appareil (100) selon la revendication 6, avec lequel la première unité en bande de base (102 ; 202) est dédiée à demeure à une ou plusieurs cellules radioélectriques desservies par la première unité distante (104), et avec lequel la deuxième unité en bande de base (110 ; 210) dessert une pluralité configurable de manière variable de cellules radioélectriques du réseau de communication mobile.

9. Appareil (100) selon la revendication 1, avec lequel le traitement des données en bande de base comprend le traitement des données en bande de base de liaison montante et/ou descendante pour une ou plusieurs unités mobiles associées à une cellule desservie par la première unité distante (104), laquelle est une unité radioélectrique.

10. Appareil (100) selon la revendication 1, avec lequel la première unité en bande de base (102 ; 202), la première unité distante (104) et la deuxième unité en bande de base (110 ; 210) se trouvent respectivement à des emplacements géographiques différents, la première unité en bande de base (102 ; 202) et la première unité distante (104) formant une station de base distribuée du réseau de communication mobile, la station de base distribuée étant connectée à la deuxième unité en bande de base (110 ; 210) distante.

11. Procédé (400) pour un réseau de communication mobile, le réseau de communication mobile comprenant une première unité en bande de base (102 ; 202) connectée à une première unité distante (104) et comprenant une deuxième unité en bande de base (110 ; 210), la première unité en bande de base (102 ; 202) pouvant être utilisée pour exécuter un traitement de données en bande de base pour une ou plusieurs unités mobiles associées à la première unité distante (104), le procédé comprenant :
initiation (406), conformément à un mode de division sélectionné, d'une relocalisation d'au moins une partie du traitement de données en bande de base pour la ou les plusieurs unités mobiles associées à la première unité distante (104) de la première unité en bande de base (102 ; 202) vers la deuxième unité en bande de base (110; 210),
**caractérisé en ce que**
l'initiation (406) de la relocalisation comprend le traitement d'un message de division comprenant un indicateur de mode de division (304) et une adresse de réseau (356) de la deuxième unité en bande de base (110 ; 210), l'indicateur de mode de division (304) indiquant quelle première partie du traitement de données en bande de base pour la première unité distante (104) doit être exécutée par la première unité en bande de base (102 ; 202) et quelle deuxième partie du traitement de données en bande de base pour la première unité distante (104) doit être exécutée par la deuxième unité en bande de base (110 ; 210) possédant l'adresse de réseau (356).

12. Programme informatique comprenant un code de programme pour exécuter les étapes du procédé (400) selon la revendication 11, si le programme informatique est exécuté sur un dispositif matériel programmable.

13. Réseau de communication mobile, comprenant :
une première unité en bande de base (102 ; 202) connectée à une première unité distante (104), la première unité en bande de base (102 ; 202) pouvant être utilisée pour exécuter un traitement de données en bande de base pour une ou plusieurs unités mobiles associées à la première unité radioélectrique distante (104) ;
une deuxième unité de traitement en bande de base (110 ; 210) ; et
un module de division (114) pouvant être utilisé pour initier, conformément à un mode de division sélectionné, une relocalisation d'au moins une partie du traitement de données en bande de base pour la ou les plusieurs unités mobiles associées à la première unité distante (104) de la première unité en bande de base (102 ; 202) vers la deuxième unité en bande de base (110 ; 210),
**caractérisé en ce que**
le module de division (114) peut être utilisé pour traiter un message de division comprenant un indicateur de mode de division (304) et une adresse de réseau (356) de la deuxième unité en bande de base (110 ; 210), l'indicateur de mode de division (304) indiquant quelle première partie du traitement de données en bande de base pour la première unité distante (104) doit être exécutée par la première unité en bande de base (102; 202) et quelle deuxième partie du traitement de données en bande de base pour la première unité distante (104) doit être exécutée par la deuxième unité en bande de base (110 ; 210) possédant l'adresse de réseau (356).

14. Réseau de communication mobile selon la revendication 13, avec lequel la deuxième unité en bande de base (110 ; 210) est une unité en bande de base centrale du réseau de communication mobile destinée à exécuter le traitement de données en bande de base pour une pluralité de cellules radioélectriques du réseau de communication mobile.
